# FASCICULE DE BREVET EUROPEEN

(11) **EP 0 874 374 B1**
(45) Date de publication et mention de la délivrance du brevet: **16.10.2002**
(21) Numéro de dépôt: 98400955.5
(22) Date de dépôt: 17.04.1998
(51) Int. Cl.: H01C 1/012, H01C 1/034, H01C 3/06, H01C 3/12, H02K 23/66

(54) **Résistance électrique formant une ceinture résistive souple et appareil comportant cette résistance.**
Elektrischer Widerstand als widerstandsfähiger flexibler Gürtel und mit diesem Widerstand versehenes Gerät
Electrical resistance as resistive flexible belt and apparatus using said resistance

(30) Priorité: 22.04.1997 FR 9704970
(43) Date de publication de la demande: 28.10.1998
(73) Titulaire: Vishay SA, 06000 Nice (FR)
(72) Inventeur: Serpolet, Stéphane, 06600 Antibes (FR); Fillion, Pascale, 06000 Nice (FR)
(74) Mandataire: Keib, Gérard

(56) Documents cités:
- EP-A- 0 363 191
- EP-A- 0 812 051
- US-A- 3 683 132
- US-A- 4 342 020
- US-A- 4 878 039

## Description

La présente invention concerne une résistance électrique, formant une ceinture résistive, apte à épouser des formes géométriques variables et à être utilisée dans des environnements à fortes contraintes mécaniques et thermiques.

Une telle ceinture permet par exemple de modifier, de manière optionnelle, une valeur de résistance dans un appareil électrique fabriqué en série sans modifier la chaîne de fabrication. Ceci peut concerner, par exemple, le réglage de la vitesse d'un moteur à courant continu en modifiant le flux généré par l'inducteur de ce moteur. Dans ce cas, une résistance montée en série avec l'inducteur permet de modifier la valeur du courant absorbé par le moteur, et partant, la valeur de la vitesse du moteur à courant continu.

Les solutions généralement utilisées à cet effet consistent à monter plusieurs résistances en série ou en parallèle et à prévoir un système de commande permettant de connecter sélectivement les résistances en fonction du courant électrique désiré.

Un inconvénient de ces solutions provient du fait que les résistances doivent être installées sur tous les appareils fabriqués même si une partie seulement de ces appareils est vendue avec l'option supplémentaire de réglage. Ceci augmente le coût de fabrication ainsi que l'encombrement dans les appareils vendus sans option de réglage supplémentaire.

Le document US 4 878 039 décrit un détecteur de température comprenant un filament dont la valeur de la résistance électrique dépend de la température, ce filament étant protégé mécaniquement entre deux bandes flexibles non élastiques.

Le but de la présente invention est de réaliser une résistance électrique en forme de ceinture résistive souple, susceptible d'être ajoutée uniquement aux appareils vendus avec option, sans modifier la chaîne de fabrication.

Un autre but de l'invention consiste à réaliser une ceinture résistive qui peut être adaptée à n'importe quelle configuration géométrique, facile à fabriquer en grande série et dont les dimensions et la valeur résistive peuvent être aisément adaptées à des appareils différents.

La résistance électrique selon l'invention comporte au moins un élément résistif moulé dans une enveloppe souple, électriquement isolante, et présentant une bonne tenue en température, de manière à former une ceinture résistive.

Selon un premier mode de réalisation de l'invention, l'élément résistif est agencé entre deux feuilles en matériau élastomère ou en caoutchouc naturel formant une structure en sandwich.

Le nombre et la taille des éléments résistifs peuvent être adaptés en fonction de l'utilisation envisagée de la ceinture résistive. Ainsi, deux ou plusieurs paires de bornes de contact électrique sont prévus pour permettre la connexion de la ceinture résistive dans un appareil électrique.

D'autres caractéristiques et avantages de l'invention ressortiront de la description qui va suivre, prise à titre d'exemple non limitatif, en référence aux figures annexées dans lesquelles:
- la figure 1 est une vue schématique en élévation d'une résistance électrique selon l'invention;
- la figure 2 représente schématiquement un premier mode de réalisation d'une résistance électrique selon l'invention;
- la figure 3 représente un deuxième mode de réalisation d'une résistance électrique selon l'invention;
- la figure 4 représente un schéma électrique simplifié d'un moteur comportant une résistance électrique selon l'invention;
- la figure 5 illustre schématiquement un mode de montage de la ceinture résistive sur le moteur de la figure 4.

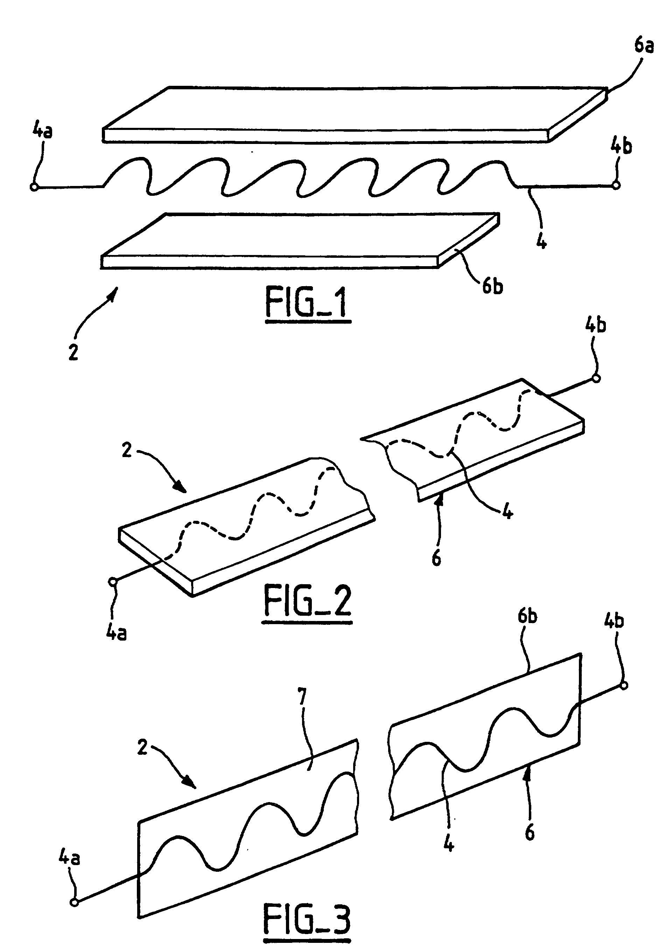

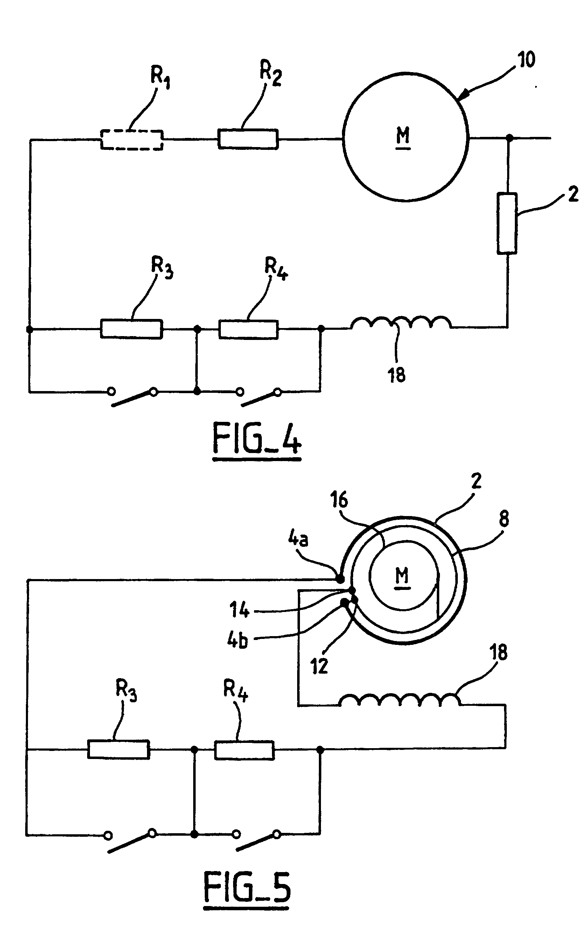

Les figures 1 et 2 représentent schématiquement une ceinture résistive 2 apte à épouser une pluralité de formes géométriques différentes et comportant un élément résistif 4 ayant deux extrémités libres 4a et 4b permettant de connecter ladite ceinture résistive à un circuit électrique. L'élément résistif 4 est moulé dans une enveloppe souple 6 électriquement isolante et présentant une bonne tenue en température.

Avantageusement, l'enveloppe souple 6 est réalisée par vulcanisation sous presse chaude d'un matériau en Nitrile hydrogéné ou en EPDM peroxyde chargé isolant.

Selon un mode de réalisation préféré de l'invention, illustré par la figure 1, l'enveloppe isolante 6 comporte deux feuilles 6a et 6b formant une structure en sandwich enveloppant ledit élément résistif 4. Les feuilles 6a et 6b peuvent présenter des formes variées adaptées à l'environnement d'utilisation de la ceinture résistive 2. Elles peuvent ou bien être plates et présenter une forme carrée ou une forme rectangulaire ou encore avoir une structure présentant un relief, avec une forme circulaire ou triangulaire par exemple. Dans tous les cas, outre la fonction de résistance électrique, la ceinture résistive 2 peut également remplir la fonction d'un joint d'étanchéité et/ou de maintien entre deux parties adjacentes de l'appareil électrique sur lequel elle est montée.

Selon un deuxième mode de réalisation de l'invention, illustré par la figure 3, l'enveloppe isolante 6 comporte une seule feuille souple 6b, isolante électriquement, dans laquelle est moulé l'élément résistif 4. Dans ce mode de réalisation, la ceinture résistive 2 présente deux faces distinctes, soit une première face 7 sur laquelle l'élément résistif 4 fait saillie, totalement ou partiellement, et une deuxième face constituée par la feuille isolante 6b. Avec cette structure, et par un choix judicieux des matériaux de l'élément résistif 4 et de l'enveloppe isolante 6, la ceinture résistive 2 peut être utilisée comme élément chauffant. Dans ce cas, la première face 7 est hermétiquement collée sur un corps en matériau électriquement isolant de forme quelconque, tel que du verre par exemple, auquel l'élément résistif 4, chauffé par effet joule, fournit de la chaleur.

Selon le mode de réalisation illustré par les figures 1 à 3, l'élément résistif 4 est constitué par un fil fabriqué à partir d'un alliage tel que du NiCu45, NiCr, du Manganin ou tout autre matériau capable d'absorber de fortes surcharges dans des temps très courts. Le diamètre et la longueur du fil sont calculés en fonction de la valeur ohmique souhaitée. Dans certaines applications, plusieurs fils peuvent être montés en série ou en parallèle de manière à constituer plusieurs résistances électriques différentes qui peuvent être connectées sélectivement au circuit d'utilisation de la ceinture résistive 2. Cette dernière comporte alors plusieurs bornes de contact permettant de connecter un ou plusieurs éléments résistifs au circuit électrique d'utilisation. L'élément résistif 4 peut être également constitué par un ruban résistif.

Les figures 4 et 5 illustrent schématiquement un exemple d'utilisation de la ceinture résistive 2. Cette dernière et enroulée autour du stator 8 d'un moteur à courant continu 10 afin de modifier sa vitesse. La borne de connexion 4a de la ceinture résistive 2 est reliée à une première borne du circuit d'excitation du moteur 10 tandis que la borne 4b de ladite ceinture résistive 2 est reliée à une deuxième borne 12 du moteur 10.

Ce type de moteur offre de grandes possibilités pour obtenir des vitesses de rotation variables. En effet, sachant que la vitesse de rotation d'un tel moteur dépend de la tension aux bornes de l'induit 16 et du flux φ généré par l'inducteur 18, on peut modifier la vitesse en agissant sur la tension U et le flux ou sur le courant d'excitation d'inducteur 18. L'adjonction d'une ou de plusieurs résistances (R1, R2, R3, R4...) en série avec les circuits de l'induit et/ou de l'inducteur, peut être faite de façon optionnelle pour permettre un réglage particulier de la vitesse du moteur. Ceci peut être réalisé au moyen de la ceinture résistive 2 dont la souplesse permet de la connecter aisément au circuit électrique de commande du moteur en l'enroulant autour d'une pièce fixe dudit moteur, par exemple autour du stator, comme cela est représenté à la figure 5. Cette connexion électrique peut se faire simplement par liaison des bornes 4a et 4b avec des bornes de connexion prévues à cet effet sur les moteurs produits en série.

Outre sa simplicité de fabrication, la résistance électrique selon l'invention s'apprête à de multiples applications dans des conditions variées de températures et de contraintes mécaniques. Elle peut être fabriquée à partir de matériaux peu coûteux et largement répandus.

A titre d'exemple, l'enveloppe souple peut être réalisée par vulcanisation à partir des élastomères des familles suivantes:
- polyisobutyle
- caoutchouc de butyle
- styrène/butadiène
- butadiène/acrylonitrile
- néoprène
- caoutchouc éthylène/propylène
- caoutchouc silicone et variante..
- tous polymères souples quel que soit leur système de réticulation et de mise en oeuvre.

L'élément résistif 4 peut être fabriqué à partir d'alliages couramment utilisés dans l'industrie électronique.

## Revendications

1. Résistance électrique apte à épouser une pluralité de formes géométriques différentes, **caractérisée en ce qu'**elle comporte au moins un élément résistif (4) moulé dans une enveloppe souple (6), électriquement isolante, et présentant une bonne tenue en température, de manière à former une ceinture résistive (2).

2. Résistance électrique selon la revendication 1, **caractérisée en ce que** l'enveloppe isolante (6) comporte deux feuilles (6a, 6b) formant une structure en sandwich autour de l'élément résistif (4).

3. Résistance électrique selon la revendication 1, **caractérisée en ce que** l'enveloppe souple (6) comporte une seule feuille 6b enveloppant partiellement l'élément résistif (4) de manière à présenter une première face isolante (7) sur laquelle au moins une partie de l'élément résistif (4) fait saillie, et une deuxième face constituée par ladite feuille isolante (6b).

4. Résistance électrique selon l'une des revendications 1 à 3, **caractérisée en ce que** ladite enveloppe isolante (6) est obtenue par vulcanisation d'un élastomère ou par réticulation d'un polymère souple.

5. Résistance électrique selon l'une des revendications 1 à 4, **caractérisée en ce que** l'élément résistif (4) est constitué par un filament résistif.

6. Résistance électrique selon l'une des revendications 1 à 4, **caractérisée en ce que** l'élément résistif (4) est réalisé par une pluralité de filaments associés en série ou en parallèle.

7. Résistance électrique selon l'une des revendications 1 à 4, **caractérisée en ce que** l'élément résistif (4) est constitué par un ruban résistif.

8. Appareil électrique comportant une résistance électrique, **caractérisé en ce que** ladite résistance électrique comporte au moins un élément résistif (4) moulé dans une enveloppe souple (6), électriquement isolante, et présentant une bonne tenue en température de manière à former une ceinture résistive (2).

9. Moteur électrique (10) à courant continu, comportant une résistance électrique, **caractérisé en ce que** ladite résistance électrique est agencée autour du stator (8) et comporte au moins un élément résistif (4) moulé dans une enveloppe souple (6), électriquement isolante, et présentant une bonne tenue en température de manière à former une ceinture résistive (2).

## Patentansprüche

1. Elektrischer Widerstand, welcher geeignet ist, sich einer Vielzahl von verschiedenen geometrischen Formen anzuschmiegen, **dadurch gekennzeichnet, dass** er mit wenigstens einem Widerstandselement (4) versehen ist, das in eine biegsame Hülle (6) eingebracht ist, die elektrisch isolierend ist und eine gute Temperaturfestigkeit aufweist, um einen Widerstandsgürtel (2) zu formen.

2. Elektrischer Widerstand nach Anspruch 1, **dadurch gekennzeichnet, dass** die isolierende Hülle (6) zwei Lagen (6a, 6b) aufweist, die eine Sandwich-Struktur um das Widerstandselement (4) formen.

3. Elektrischer Widerstand nach Anspruch 1, **dadurch gekennzeichnet, dass** die biegsame Hülle (6) eine einzige Lage (6b) umfasst, die das Widerstandselement (4) teilweise umgibt, derart, dass sie eine erste isolierende Seite (7), auf welcher wenigstens ein Teil des Widerstandselements (4) vorragt, und eine zweite Seite, welche durch die isolierende Lage (6b) gebildet ist, aufweist.

4. Elektrischer Widerstand nach einem der Ansprüche 1 bis 3, **dadurch gekennzeichnet, dass** die isolierende Hülle (6) durch Vulkanisieren eines Elastomers oder durch Vernetzen eines biegsamen Polymers gewonnen ist.

5. Elektrischer Widerstand nach einem der Ansprüche 1 bis 4, **dadurch gekennzeichnet, dass** das Widerstandselement (4) durch einen Widerstandsdraht gebildet ist.

6. Elektrischer Widerstand nach einem der Ansprüche 1 bis 4, **dadurch gekennzeichnet, dass** das Widerstandselement (4) durch eine Vielzahl von in Reihe oder parallel verbundenen Drähten gebildet ist.

7. Elektrischer Widerstand nach einem der Ansprüche 1 bis 4, **dadurch gekennzeichnet, dass** das Widerstandselement (4) durch ein Widerstandsband gebildet ist.

8. Elektrisches Gerät, welches mit einem elektrischen Widerstand versehen ist, **dadurch gekennzeichnet, dass** der elektrische Widerstand wenigstens ein Widerstandselement (4) umfasst, welches in eine biegsame Hülle (6) eingebracht ist, die elektrisch isolierend ist und eine gute Temperaturfestigkeit aufweist, um einen Widerstandsgürtel (2) zu formen.

9. Elektrischer Gleichstrommotor (10), welcher mit einem elektrischen Widerstand versehen ist, **dadurch gekennzeichnet, dass** der elektrische Widerstand um den Stator (8) angeordnet ist und wenigstens ein Widerstandselement (4) umfasst, welches in eine biegsame Hülle (6) eingebracht ist, die elektrisch isolierend ist und eine gute Temperaturfestigkeit aufweist, um einen Widerstandsgürtel (2) zu formen.

## Claims

1. An electric resistor adapted to intimately follow a number of different geometrical shapes, **characterised in that** it comprises at least one resistive element (4) moulded in a flexible envelope (6) which is electrically insulating and has good temperature resistance, so as to form a resistive belt (2).

2. An electric resistor according to claim 1, **characterised in that** the insulating envelope (6) comprises two sheets (6a, 6b) forming a sandwich structure around the resistive element (4).

3. An electric resistor according to claim 1, **characterised in that** the flexible envelope (6) comprises a single sheet (6b) which partially envelopes the resistive element (4) so as to have a first insulating face (7) from which at least a part of the resistive element (4) projects and a second face comprising the insulating sheet (6b).

4. An electric resistor according to any of claims 1 to 3, **characterised in that** the insulating envelope (6) is obtained by vulcanisation of an elastomer or by cross-linking a flexible polymer.

5. An electric resistor according to any of claims 1 to 4, **characterised in that** the resistive element (4) is a resistive filament.

6. An electric resistor according to any of claims 1 to 4, **characterised in that** the resistive element (4) is in the form of a number of filaments associated in series or in parallel.

7. An electric resistor according to any of claims 1 to 4, **characterised in that** the resistive element (4) is a resistive strip.

8. An electric apparatus comprising an electric resistor, **characterised in that** the electric resistor comprises at least one resistive element (4) moulded in a flexible envelope (6) which is electrically insulating and has good resistance to heat, so as to form a resistive belt (2).

9. A DC electric motor (10) comprising an electric resistor **characterised in that** the electric resistor is disposed around the stator (8) and comprises at least one resistive element (4) moulded in a flexible envelope (6) which is electrically insulating and has good resistance to temperature, so as to form a resistive belt (2).
